# EUROPEAN PATENT APPLICATION

(11) **EP 4 790 482 A1**
(43) Date of publication of application: **12.08.2026**
(21) Application number: 25762882.6
(22) Date of filing: 05.08.2025
(51) Int. Cl.: G03B 13/36, G03B 3/10, G03B 17/12, H04N 23/54, H04N 23/55, H04N 23/51

(54) **CAMERA MODULE, AND ELECTRONIC DEVICE INCLUDING CAMERA MODULE**

(30) Priority: 05.08.2024 KR 20240104105; 25.09.2024 KR 20240129741
(71) Applicant: Samsung Electronics Co., Ltd, Suwon-si, Gyeonggi-do 16677 (KR)
(72) Inventor: MOON, Chanyoung, Suwon-si, Gyeonggi-do 16677 (KR)
(74) Representative: Nederlandsch Octrooibureau
(86) International application number: PCT/KR2025/011736
(87) International publication number: WO 2026/034994

(57) **Abstract**

A camera module according to various embodiments disclosed herein may include a lens assembly including one or more lenses substantially aligned along an optical axis, an image sensor configured to detect light acquired through the lens assembly, an autofocus (AF) housing including a first sidewall, which accommodates at least a portion of the lens assembly and moves substantially along the optical axis, an upper housing including a second sidewall, which surrounds at least a portion of the AF housing, faces the first sidewall, and is spaced apart from the first sidewall, a lower housing coupled to the upper housing and including a third sidewall, which surrounds at least a portion of the image sensor, and is positioned between the first sidewall and the second sidewall, and an elastic member disposed between the third sidewall of the lower housing and the first sidewall of the AF housing. Various other embodiments may be possible.

## Description

### [Technical Field]

Various embodiments disclosed herein relate to a camera module and an electronic device including the camera module.

### [Background Art]

Various electronic devices, such as a smartphone, a tablet PC, a portable multimedia player (PMP), a personal digital assistant (PDA), a laptop personal computer (PC), a smart watch, and a head-mounted display (HMD), may include a camera and may capture an image using the camera.

As the number of users capturing photos or videos using electronic devices increases, the performance of cameras included in electronic devices is also improving. For example, when capturing an image using a camera included in an electronic device, in order to obtain a clear image, it may be necessary to adjust the focus of the subject or to compensate for shaking (e.g., hand tremor) that may occur when taking a picture of the subject.

A camera module used in an electronic device may include an autofocus (AF) function that automatically adjusts the focus of a lens on a subject and/or an optical image stabilizer (OIS) function that compensates for shaking occurring in the camera module when taking a picture of a subject. The AF function and the OIS function of the camera module may be driven based on electromagnetic force using a magnet and a coil.

The above-described information may be provided as related art for the purpose of helping to understand the disclosure. No claim or determination is made as to whether any of the foregoing may be applied as prior art with respect to the disclosure.

### [Disclosure of Invention]

### [Technical Solution]

A camera module according to an embodiment of the disclosure may include a lens assembly including one or more lenses substantially aligned along an optical axis, an image sensor configured to detect light acquired through the lens assembly, an AF housing including a first sidewall, which accommodates at least a portion of the lens assembly and moves substantially along the optical axis, an upper housing including a second sidewall, which surrounds at least a portion of the AF housing, faces the first sidewall, and is spaced apart from the first sidewall, a lower housing coupled to the upper housing and including a third sidewall, which surrounds at least a portion of the image sensor, and is positioned between the first sidewall and the second sidewall, and an elastic member disposed between the third sidewall of the lower housing and the first sidewall of the AF housing.

In an electronic device including a camera module according to an embodiment, the camera module according to an embodiment of the disclosure may include a lens assembly including one or more lenses substantially aligned along an optical axis, an image sensor configured to detect light acquired through the lens assembly, an AF housing including a first sidewall, which accommodates at least a portion of the lens assembly and moves substantially along the optical axis, an upper housing including a second sidewall, which surrounds at least a portion of the AF housing, faces the first sidewall, and is spaced apart from the first sidewall, a lower housing coupled to the upper housing and including a third sidewall, which surrounds at least a portion of the image sensor, and is positioned between the first sidewall and the second sidewall, and an elastic member disposed between the third sidewall of the lower housing and the first sidewall of the AF housing.

### [Brief Description of Drawings]

In connection with the description of the drawings, the same or similar components may be denoted by the same or similar reference numerals.
FIG. 1 is a block diagram of an electronic device according to various embodiments of the disclosure in a network environment.
FIG. 2 is a block diagram exemplifying a camera module according to various embodiments.
FIG. 3A is a perspective view of a camera module according to an embodiment of the disclosure.
FIG. 3B is a front view of a lens assembly of the camera module according to an embodiment of the disclosure.
FIG. 4 is an exploded perspective view of the camera module illustrated in FIGS. 3A and 3B according to an embodiment of the disclosure.
FIG. 5A is a cross-sectional view taken along line 5a-5a of FIG. 3B.
FIG. 5B is a view illustrating the disposition relationship of an AF housing, an elastic member, and a lower housing in FIG. 5A.
FIG. 6 is a perspective view of a camera module according to an embodiment of the disclosure, in which an upper housing, a shield can, and a lens assembly positioned above the AF housing have been removed.
FIGS. 7A, 7B, and 7C are views illustrating the coupling relationship between an AF housing and a lower housing and the disposition positions of elastic members, according to an embodiment of the disclosure.
FIGS. 8A, 8B, and 8C are views illustrating the coupling relationship between an AF housing and a lower housing and the disposition positions of elastic members, according to an embodiment of the disclosure.
FIGS. 9A and 9B are views illustrating the positional relationship between a spring member and an elastic member disposed in the lower housing according to an embodiment of the disclosure.
FIGS. 10A, 10B, 10C, and 10D are views illustrating the variability of a disposition region of an elastic member depending on the shape of the spring member in an embodiment of the disclosure.
FIGS. 11A and 11B are views illustrating a camera module including AF magnets and AF coils having a disposition relationship that differs from that of the AF magnets and the AF coils in FIG. 4.
FIGS. 12A and 12B are views illustrating a camera module including elastic members disposed at positions that differ from those illustrated in FIG. 6, according to an embodiment of the disclosure.
FIG. 13A is a view illustrating a graph that represents the vibration applied to an AF housing over time when an external impact is applied to a camera module that does not include elastic members in a comparative example.
FIG. 13B is a view illustrating a graph that represents the vibration applied to an AF housing over time when an external impact is applied to a camera module including elastic members of the disclosure.

### [Mode for the Invention]

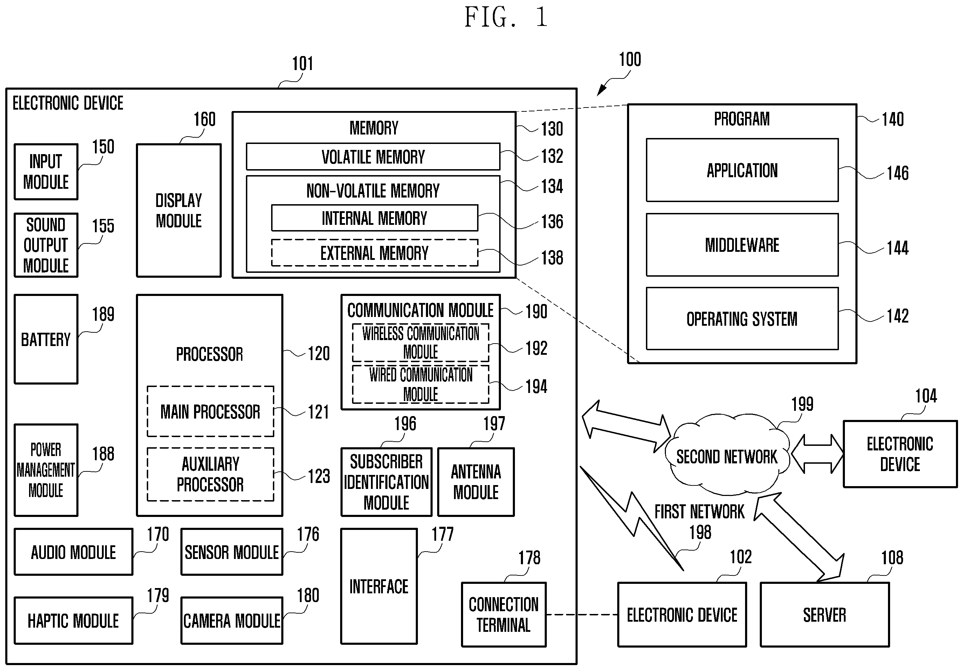

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

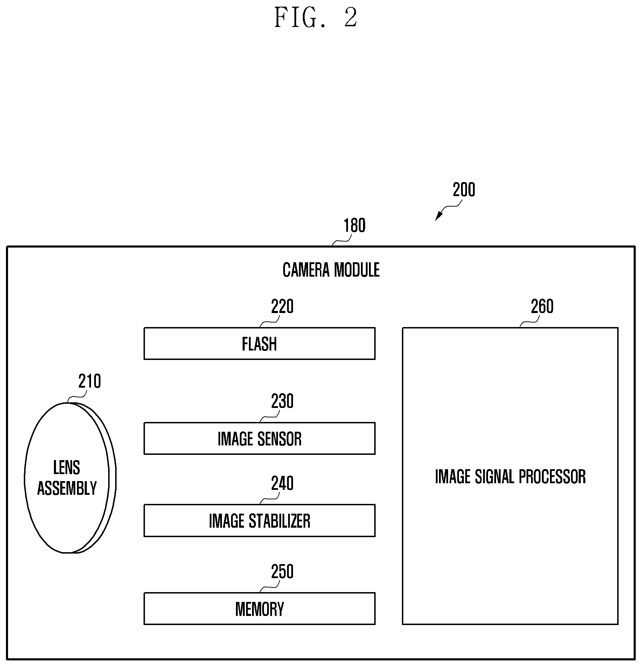

Fig. 2 is a block diagram 200 illustrating the camera module 180 according to various embodiments. Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules180 may form a telephoto camera. Similarly, at least one of the plurality of camera modules 180 may form, for example, a front camera and at least another of the plurality of camera modules180 may form a rear camera.

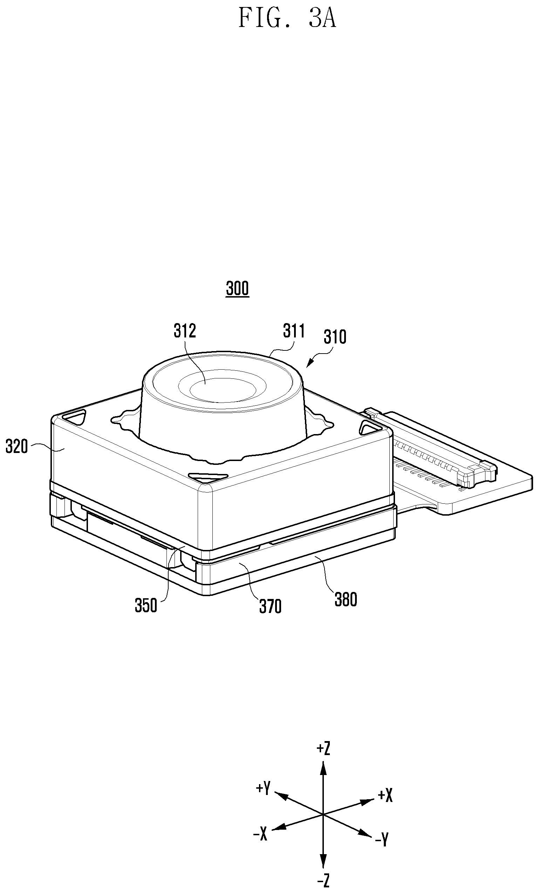

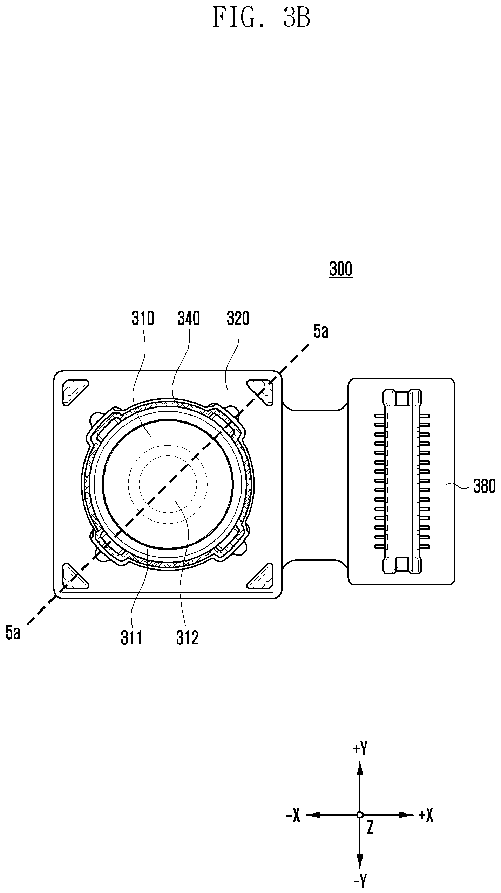

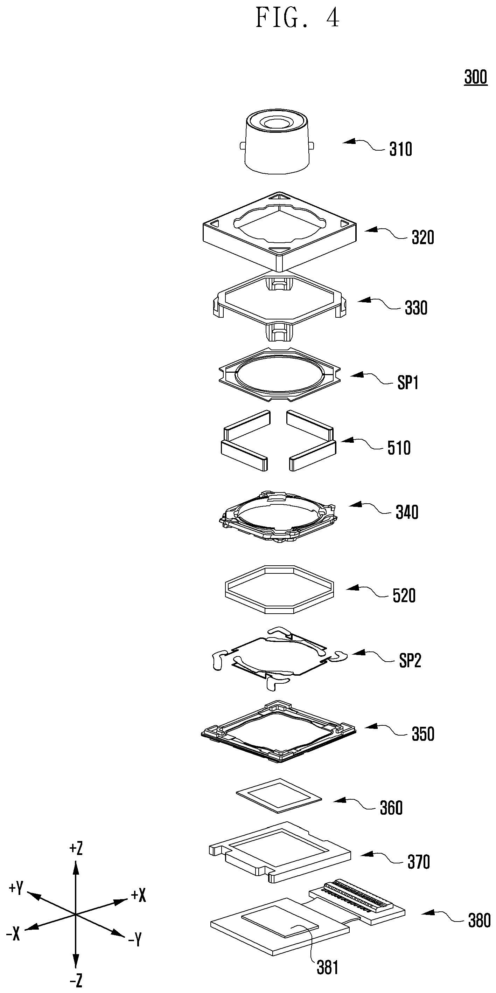

FIG. 3A is a perspective view of a camera module according to an embodiment of the disclosure. FIG. 3B is a front view of a lens assembly of the camera module according to an embodiment of the disclosure. FIG. 4 is an exploded perspective view of the camera module illustrated in FIGS. 3A and 3B according to an embodiment of the disclosure.

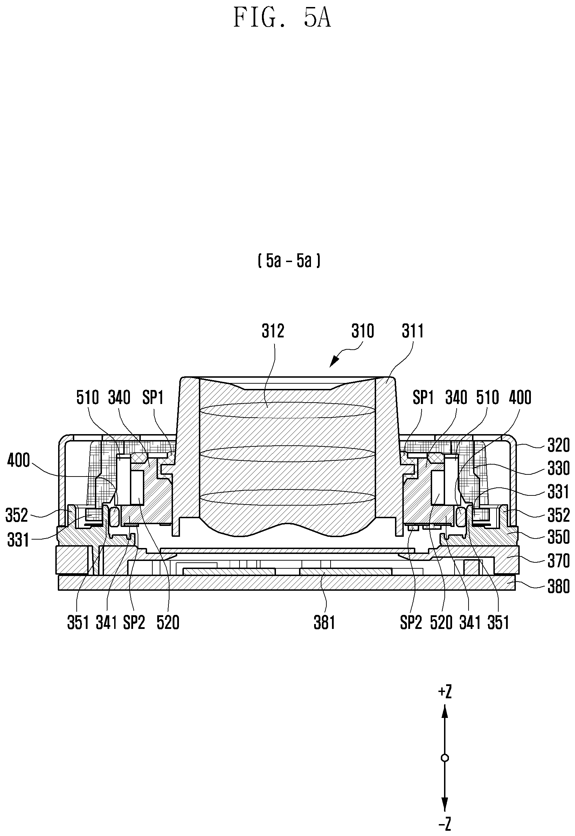

As illustrated in FIGS. 3A, 3B, and 4, according to an embodiment of the disclosure, a camera module 300 (e.g., the camera module 180 in FIG. 1) may include a lens assembly 310 (e.g., the lens assembly 210 in FIG. 2), a shield can 320, an upper housing 330 (e.g., a first housing, a cover housing, or a cover member), an AF housing 340 (e.g., an AF carrier), a lower housing 350 (e.g., a second housing, a base housing, or a base member), a first spring member SP1, a second spring member SP2, at least one AF magnet 510 (e.g., a first driving magnet or a first magnet), at least one AF coil 520 (e.g., a first driving coil or a first coil), an IR filter 360, an IR bracket 370, an image sensor 381, a substrate 380 electrically connected to the image sensor 381 (e.g., a flexible printed circuit board), and/or one or more elastic members (e.g., the one or more elastic members 400 in FIG. 5A) (e.g., a buffer member or a damper). The configuration of the camera module 300 described above is exemplary, and at least one of the above-described components may be omitted from the camera module 300, or at least one component may be added to the camera module.

According to an embodiment, as illustrated in FIG. 4, the camera module 300 may include an AF housing 340 accommodated in the lower housing 350. In an embodiment, the lower housing 350 may be a housing facing the image sensor 381 connected to the substrate 380. In an embodiment, as illustrated in FIG. 4, the camera module 300 may have a structure in which the substrate 380, the image sensor 381, an IR filter 360 disposed on the IR bracket 370, the lower housing 350, the second spring member SP2, the AF housing 340 accommodating the lens assembly 310, the upper housing 330, and the shield can 320 are stacked in that order.

According to an embodiment, as illustrated in FIG. 4, the AF housing 340 may be a housing that accommodates the lens assembly 310. The AF housing 340 may be disposed inside the lower housing 350 while accommodating the lens assembly 310. In an embodiment, the AF housing 340 may have an open-top structure to allow the lens assembly 310 to be disposed therein. In an embodiment, the lower housing 350 may have an open-top structure to allow the AF housing 340 to be disposed therein.

According to an embodiment, as illustrated in FIG. 4, the upper housing 330 may be coupled to the lower housing 350 to surround a portion of the AF housing 340 and the lens assembly 310 accommodated in the AF housing 340. In an embodiment, the upper housing 330 may have a shape that surrounds the lens assembly 310 to accommodate at least a portion of the lens assembly 310 accommodated in the AF housing 340. As will be described later, the upper housing 330 may be coupled to the lower housing 350 by disposing its sidewalls (e.g., second partition walls or the second sidewalls 331 in FIG. 5A) between sidewalls provided in the lower housing 350 (e.g., the third sidewalls 351 and the fourth sidewalls 352 in FIG. 5A). In an embodiment, the second sidewalls 331 of the upper housing 330 (e.g., sidewalls, partition walls, or portions of the upper housing 330) may at least partially protrude toward the lower housing 350 to at least partially cover the one or more elastic members 400 disposed in the lower housing 350 when viewed from above the camera module 300 (e.g., in the -Z direction in FIG. 4). For example, referring to FIG. 5A, the second sidewalls 331 of the upper housing 330 may partially extend toward the lens assembly 310. Accordingly, when the camera module is viewed from above (e.g., in the -Z direction in FIG. 5A), the one or more elastic members 400 may be at least partially covered by the second sidewalls 331.

According to an embodiment, referring to FIGS. 3A, 3B, and 4, and FIG. 5A (which will be described later), the lens assembly 310 may include at least one lens 312 and a lens barrel 311 (e.g., a cylindrical housing) in which the lens 312 is disposed. In an embodiment, the lens barrel 311 may be a housing that accommodates multiple lenses 312. In an embodiment, the multiple lenses 312 may be arranged inside the lens barrel 311 along the optical axis of the lens (e.g., the Z-axis in FIG. 4).

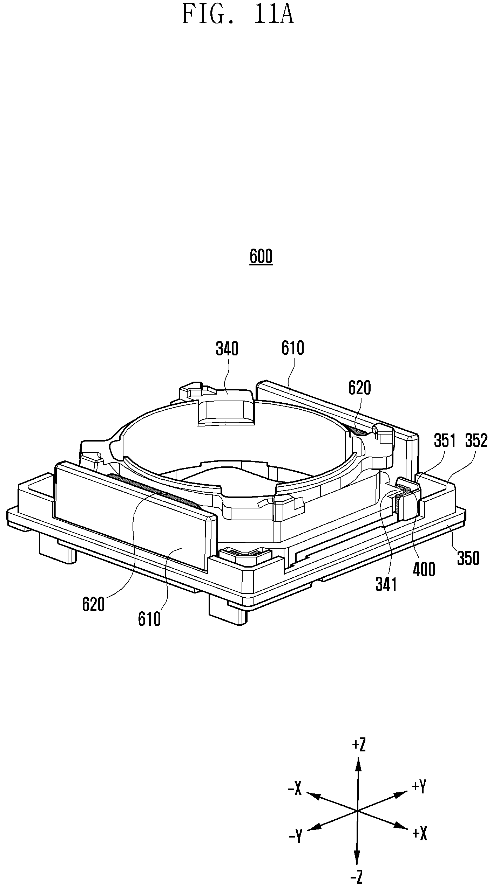

In an embodiment, the lens assembly 310 may be moved for AF adjustment to automatically adjust the focus of the lens 312 on a subject. In an embodiment, as the AF housing 340 moves along the optical axis (e.g., the Z-axis direction in FIG. 4) relative to the lower housing 350 for focus adjustment of the lens 312, the lens assembly 310 may move along the optical axis together with the AF housing 340. In an embodiment, the camera module 300 may include an AF actuator that provides a driving force necessary for the AF housing 340 to move along the optical axis relative to the lower housing 350. In an embodiment, the AF actuator may include AF magnets 510 (e.g., first driving magnets or first magnets) and AF coils 520 (e.g., first driving coils or first coils). In an embodiment, either the AF magnets 510 or the AF coils 520 may be disposed in the AF housing 340. The remaining ones of the AF magnets 510 and the AF coils 520 may be disposed inside the camera module 300 to face either the AF magnets 510 or the AF coils 520 disposed in the AF housing 340. For example, as illustrated in FIG. 4, the AF coils 520 may be disposed along the periphery of the AF housing 340. The AF magnets 510 may be disposed inside the shield can 320 to face the AF coils 520. However, as illustrated in FIG. 11A, multiple AF coils 620 (e.g., the AF coils 520) may be disposed in the AF housing 340 to face each other. Similarly, multiple AF magnets 610 (e.g., the AF magnets 510) may be provided to face the AF coils 620. The processor 120 may control the AF coils 520 to induce an electromagnetic interaction between the AF magnets 510 and the AF coils 520 and to move the AF housing 340 along the optical axis relative to the lower housing 350. Accordingly, the camera module 300 may adjust the focus of the lens 312 as the lens assembly 310 disposed in the AF housing 340 moves along the optical axis together with the AF housing 340.

In an embodiment, the lens assembly 310 may be moved for an OIS to compensate for shaking occurring in the camera module 300 when taking a picture of a subject. In an embodiment, the lower housing 350 may be disposed in a separate OIS housing (not illustrated). In an embodiment, at least a portion of the OIS housing may be disposed between the lower housing 350 and the IR bracket 370. In an embodiment, as the lower housing 350 moves relative to the OIS housing in a direction substantially perpendicular to the optical axis (e.g., in the X-axis direction and/or in the Y-axis direction in FIG. 3A) for image stabilization or compensation, the lens assembly 310 may move in a direction substantially perpendicular to the optical axis together with the lower housing 350. In an embodiment, the camera module 300 may include an OIS actuator that provides a driving force necessary for the lower housing 350 to move relative to the OIS housing in a direction substantially perpendicular to the optical axis. In an embodiment, the OIS actuator may include an OIS magnet (e.g., a second driving magnet or a second magnet) and an OIS coil (e.g., a second driving coil or a second coil). In an embodiment, either the OIS magnet or the OIS coil may be disposed in one of the lower housing 350 and the OIS housing. The remaining one of the OIS magnet and the OIS coil may be disposed in the other of the OIS housing and the lower housing 350 to face either the OIS magnet or the OIS coil. The processor 120 may control the OIS coil to induce an electromagnetic interaction between the OIS magnet and the OIS coil and to move the lower housing 350 relative to the OIS housing in a direction substantially perpendicular to the optical axis. Accordingly, the camera module 300 may compensate for image shaking as the lens assembly 310 moves together with the lower housing 350 in a direction in which image shaking is offset (e.g., in a direction perpendicular to the optical axis).

According to an embodiment, as illustrated in FIGS. 3A, 3B, and 4, the shield can 320 may be positioned at the outermost area of the camera module 300 and may surround at least a portion of the lower housing 350. In an embodiment, the shield can 320 may block or reduce electromagnetic waves generated outside the camera module 300 to reduce the occurrence of malfunctions in the camera module 300. In an embodiment, the shield can 320 may be made of a material that shields electromagnetic waves, such as copper, iron, aluminum, and/or nickel, and may also be made using various materials that a person skilled in the art may implement in addition to the aforementioned materials.

According to an embodiment, as illustrated in FIG. 4, the upper housing 330 and the AF magnets 510 may be disposed inside the shield can 320. In an embodiment, the upper housing 330 may be at least partially disposed in lower housing 350 in the state in which it is coupled to the shield can 320 within the shield can 320. For example, when the shield can 320 is assembled to the lower housing 350 that accommodates the AF housing 340, a portion of the upper housing 330 disposed inside the shield can 320 (e.g., the second sidewalls 331 in FIG. 5A) may be disposed in a portion of the lower housing 350 (e.g., the regions between the third sidewalls 351 and the fourth sidewalls 352 in FIG. 5A).

In an embodiment, the AF magnets 510 may be fixed inside the shield can 320. The AF magnets 510 may face the AF coils 520 disposed in the AF housing 340 in a state in which the shield can 320 is disposed on the lower housing 350 such that the upper housing 330 is partially disposed in the lower housing 350. In an embodiment, the AF housing 340 may move along the optical axis by the electromagnetic force acting between the AF coils 520 and the AF magnets 510 to perform an AF function that automatically adjusts the focus of the lens 312 on a subject. In an embodiment, in a state in which the AF magnets 510 are disposed inside the shield can 320, the N and S poles of the AF magnets 510 may face the AF coils 520 disposed in the AF housing 340. In this case, the AF housing 340 may be moved along the optical axis relative to the lower housing 350 while maintaining a vertical distance between the AF coils 520 and the AF magnets 510. However, in the above description, the AF magnets 510 are described as being disposed inside the shield can 320, and the AF coils 520 are described as being disposed in the AF housing 340, but the disclosure is not necessarily limited thereto. For example, the AF coils 520 may be disposed inside the shield can 320, and the AF magnets 510 facing the AF coil 520 may be disposed in the AF housing 340. The AF magnets 510 may be disposed in the AF housing 340 such that the N and S poles thereof face the AF coils 520 disposed in the shield can 320. In this case, the AF housing 340 may be moved along the optical axis relative to the lower housing 350 while maintaining the vertical distance between the AF coils 520 and the AF magnets 510.

In an embodiment not illustrated in the drawings, either the AF coils 520 or the AF magnets 510 may be disposed on a rear surface of the AF housing 340 (e.g., the surface oriented in the -Z direction in FIG. 4), and the remaining ones of the AF coils 520 and the AF magnets 510 may be disposed in the lower housing 350 to face the others. For example, when the AF coils 520 are disposed on the rear surface of the AF housing 340, the AF magnets 510 may be disposed in the lower housing 350, and the AF coils 520 and the AF magnets 510 may be disposed in the opposite configuration as well. In an embodiment, the AF magnets 510 may be disposed in the AF housing 340 or the lower housing 350 such that either the N poles or the S poles of the AF magnets 510 faces the AF coils 520. In this case, the vertical distance between the AF magnets 510 and the AF coils 520 may change due to the electromagnetic force acting between the AF magnets 510 and the AF coils 520. Accordingly, the AF housing 340 may move along the optical axis by the electromagnetic force acting between the AF coils 520 and the AF magnets 510 to perform an AF function that automatically adjusts the focus of the lens 312 on a subject.

In an embodiment, the camera module 300 may include a flexible printed circuit board (not illustrated) electrically connected to the AF coils 520 and/or an OIS coils. The processor 120 may be disposed on a main board (not illustrated) of the electronic device 101 and may supply current to the AF coils 520 via the flexible printed circuit board to provide a driving force in the optical axis direction to the AF housing 340. In addition, in an embodiment, the processor 120 may supply current to the OIS coil via the flexible printed circuit board to provide a driving force to the lower housing 350 in a direction perpendicular to the optical axis.

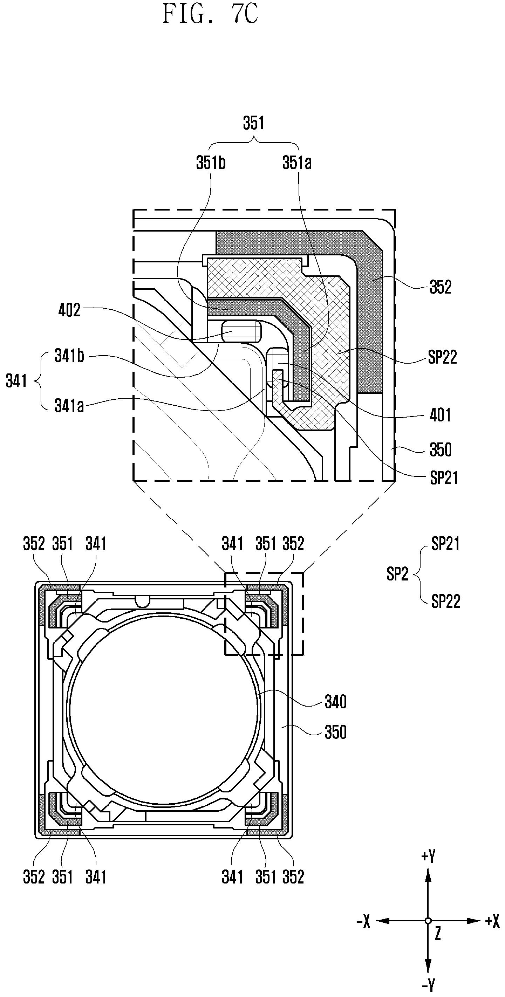

According to an embodiment, as illustrated in FIG. 4, the camera module 300 may include the first spring member SP1 and the second spring member SP2 connected to the AF housing 340. In an embodiment, the first spring member SP1 may be fixed to the upper housing 330 and the AF housing 340. For example, the first spring member SP1 may be at least partially disposed in the upper housing 330, and a portion thereof may be bonded to the AF housing 340 via welding or an adhesive member (e.g., tape or bond). In an embodiment, the second spring member SP2 may be fixed to the lower housing 350 and the AF housing 340. For example, the second spring member SP2 may be at least partially disposed in the lower housing 350, and a portion thereof may be fixed to the AF housing 340 in a bonding manner through welding or an adhesive member (e.g., tape or bond). In an embodiment, referring to FIG. 7C which will be described later, one end portion SP21 of the second spring member SP2 may be fixed to the lower housing 350 via the one or more elastic members 400.

In an embodiment, the first spring member SP1 and the second spring member SP2 may support the action of the AF housing 340 moving along the optical axis (e.g., the Z-axis direction in FIG. 4). In an embodiment, the AF housing 340 may move along the optical axis via the electromagnetic force acting between the AF coils 520 and the AF magnets 510 to perform an AF function. Referring to FIG. 5A which will be described later, when the AF housing 340 moves in the +Z direction of FIG. 5A, the first spring member SP1 and the second spring member SP2 may apply a spring force in a direction opposite to the movement of the AF housing 340 (e.g., the -Z direction of FIG. 5A). Conversely, when the AF housing 340 moves in the -Z direction of FIG. 5A, the first spring member SP1 and the second spring member SP2 may apply a spring force in a direction opposite to the movement of the AF housing 340 (e.g., the +Z direction of FIG. 5A). By applying a spring force in a direction opposite to the movement of the AF housing 340, the spring members SP1 and SP2 may control the movement of the AF housing 340 caused by external impact or vibration. In an embodiment, after the AF housing 340 moves due to the electromagnetic force acting between the AF coil 520 and the AF magnet 510, the AF housing 340 may return to its reference position before movement by the spring force applied from the spring members SP1 and SP2 when the current applied to the AF coils 520 is cut off or reduced. The reference position may be the position of the AF housing 340 in the camera module 300 before current is supplied to the AF coils 520.

In an embodiment, the first spring member SP1 and the second spring member SP2 may be formed in various shapes and/or from various materials. In an embodiment, the first spring member SP1 and the second spring member SP2 may be formed as plate springs. In an embodiment, the first spring member SP1 may be made of a metal material such as stainless steel, beryllium copper, nickel copper, or carbon steel, or a non-metal material such as polyacetal, polycarbonate, carbon fiber, urethane, or rubber.

According to an embodiment, as illustrated in FIG. 4, an IR bracket 370 in which an IR filter 360 is disposed and a substrate 380 on which an image sensor 381 is disposed may be disposed under the lower housing 350. In an embodiment, the image sensor 381 may be disposed under the IR bracket 370 to face the IR filter 360. In an embodiment, the IR filter 360 may be a filter that selectively reflects or absorbs near-infrared wavelengths to block their inflow into the image sensor 381. In an embodiment, the IR filter 360 may be disposed in the IR bracket 370 and may be disposed between the lens 312 of the lens assembly 310 and the image sensor 381. The image sensor 381 may detect light emitted or reflected from a subject and transmitted through the lens assembly 310 and the IR filter 360 and may convert the detected light into an electrical signal, thereby acquiring an image corresponding to the subject. In an embodiment, the substrate 380 connected to the image sensor 381 may be electrically connected to a main board on which the processor 120 is disposed, via a connector.

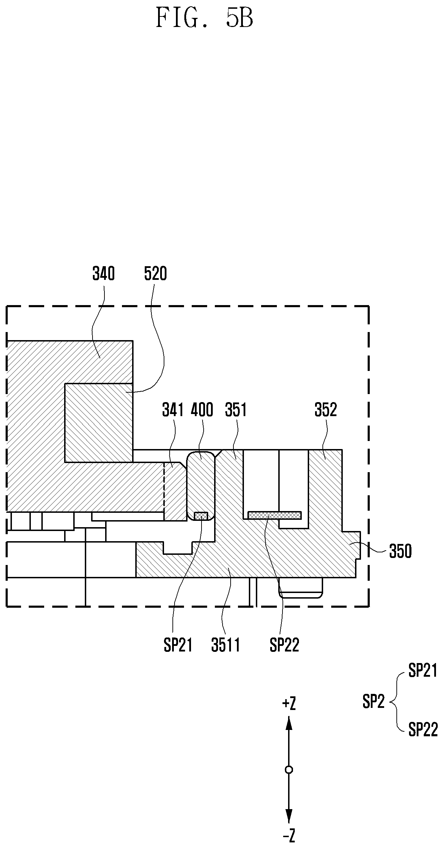

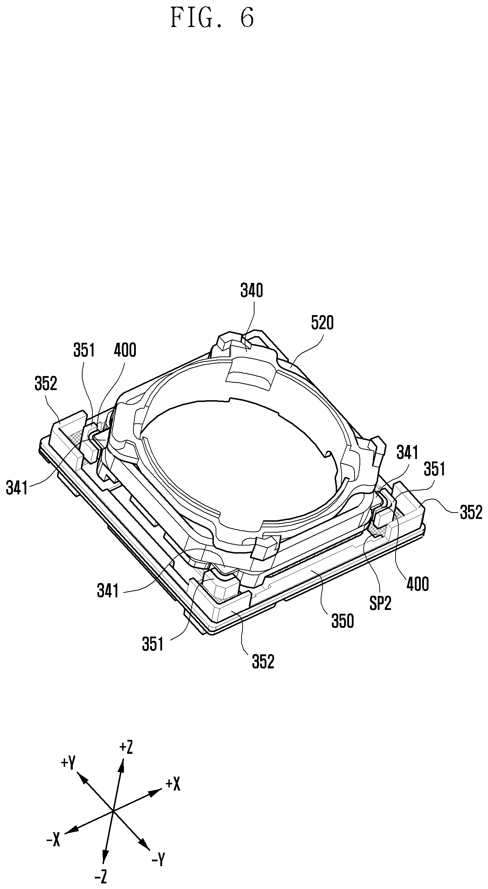

FIG. 5A is a cross-sectional view taken along line 5a-5a of FIG. 3B. FIG. 5B is a view illustrating the disposition relationship of the AF housing, an elastic member, and the lower housing in FIG. 5A. FIG. 6 is a perspective view of a camera module according to an embodiment of the disclosure, in which the upper housing, the shield can, and the lens assembly positioned above the AF housing have been removed.

According to an embodiment, as illustrated in FIGS. 5A and 5B, the AF housing 340 may include first sidewalls 341 (e.g., sidewalls, partition walls, portions, first partition walls, or first portions). In an embodiment, the first sidewalls 341 may be portions of edges (e.g., corners) of the AF housing 340. In an embodiment, in a state in which the AF housing 340 is disposed in the lower housing 350, the first sidewalls 341 may face portions of the lower housing 350 (e.g., the third sidewalls 351). In an embodiment, the lower housing 350 may include third sidewalls 351 (e.g., third partition walls, third portions, first sidewalls of the lower housing 350, first partition walls of the lower housing 350, or first portions of the lower housing 350) and/or fourth sidewalls 352 (e.g., fourth partition walls, fourth portions, first sidewalls of the lower housing 350, first partition walls of the lower housing 350, or first portions of the lower housing 350). In an embodiment, the fourth sidewalls 352 may be disposed outside the third sidewalls 351. In an embodiment, the third sidewalls 351 and/or the fourth sidewalls 352 may extend in a direction perpendicular to the bottom surface 3511 of the lower housing 350 (e.g., in the +Z direction with reference to FIG. 5A). In an embodiment, the third sidewalls 351 of the lower housing 350 may be disposed to face the first sidewalls 341 positioned at the corners of the AF housing 340 in a state in which the AF housing 340 is disposed in the lower housing 350. In an embodiment, the first sidewalls 341 of the AF housing 340, the third sidewalls 351 of the lower housing 350, and the fourth sidewalls 352 of the lower housing 350 may be disposed in parallel in a state in which the AF housing 340 is disposed in the lower housing 350.

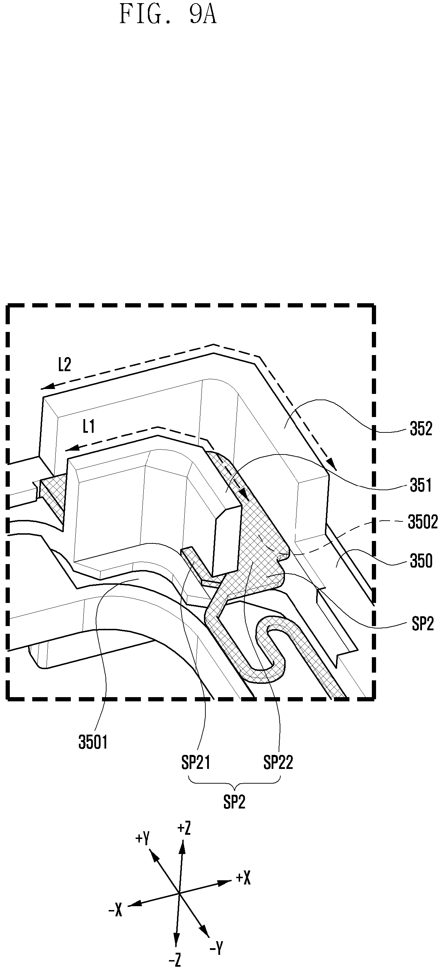

According to an embodiment, as illustrated in FIG. 5A, the third sidewalls 351 and the fourth sidewalls 352 of the lower housing 350 may be positioned outside the image sensor 381 when the camera module 300 is viewed from above (e.g., in the -Z direction of FIG. 5A). In other words, when the camera module 300 is viewed from above, the third sidewalls 351 and the fourth sidewalls 352 of the lower housing 350 may at least partially surround the image sensor 381. In an embodiment, the bottom surface 3511 of the lower housing 350 may include a first support surface 3501 (e.g., the first support surface 3501 in FIG. 9A) positioned between the third sidewalls 351 of the lower housing 350 and the first sidewalls 341 of the AF housing 340 and a second support surface 3502 (e.g., the second support surface 3502 in FIG. 9A) positioned between the third sidewalls 351 and the fourth sidewalls 352 of the lower housing 350. Referring to FIG. 7C which will be described later, in an embodiment, the second spring member SP2 may be at least partially disposed on each of the first support surface 3501 and the second support surface 3502 of the lower housing 350. For example, a portion SP22 of the second spring member SP2 may be disposed on the second support surface 3502, and an end portion SP21 extending from the portion SP22 disposed on the second support surface 3502 may be disposed on the first support surface 3501. In an embodiment, the end portion SP21 of the second spring member SP2 may be in contact with the one or more elastic members 400.

According to an embodiment, as illustrated in FIG. 5A, the upper housing 330 may include second sidewalls 331 (e.g., second partition walls or second portions). In an embodiment, the upper housing 330 may be coupled to the lower housing 350 to accommodate the lens assembly 310 and the AF housing 340. In an embodiment, in a state in which the upper housing 330 is coupled to the lower housing 350, the second sidewalls 331 of the upper housing 330 may face the first sidewalls 341 positioned at the corners of the AF housing 340. In an embodiment, the second sidewalls 331 of the upper housing 330 may at least partially protrude toward the lower housing 350 to cover at least a portion of the second spring member SP2 disposed in the lower housing 350 when the camera module 300 is viewed from above. In an embodiment, in a state in which the upper housing 330 is coupled to the lower housing 350, the second sidewalls 331 of the upper housing 330 may be positioned between the third sidewalls 351 and the fourth sidewalls 352 of the lower housing 350. In other words, the third sidewalls 351 of the lower housing 350 may be positioned between the first sidewalls 341 of the AF housing 340 and the second sidewalls 331 of the upper housing 330. Accordingly, as illustrated in FIG. 5A, the first sidewalls 341 of the AF housing 340, the third sidewalls 351 of the lower housings 350, the second sidewalls 331 of the upper housing 330, and the fourth sidewalls 352 of the lower housing 350 may be positioned in that order.

According to an embodiment, as illustrated in FIGS. 5A, 5B, and 6, the camera module 300 may include one or more elastic members 400 disposed in a space (e.g., a gap) between the first sidewalls 341 of the AF housing 340 and the third sidewalls 351 of the lower housing 350. In an embodiment, the gaps between the first sidewalls 341 of the AF housing 340 and the third sidewalls 351 of the lower housing 350 may be about 0.2 mm or more and about 0.5 mm or less. In an embodiment, the one or more elastic members 400 may not be disposed between the second sidewalls 331 of the upper housing 330 and the third sidewalls 351 of the lower housing 350. In an embodiment, the one or more elastic members 400 may be bonded to the first sidewalls 341 and the third sidewalls 351. In an embodiment, since the elastic one or more members 400 are made of a soft material, they may stretch when the AF housing 340 moves along the optical axis. The one or more elastic members 400 may be restored by elastic restoring force when the AF housing 340 returns to its original position relative to the lower housing 350. So, the deformation of the one or more elastic members 400 is reversible.

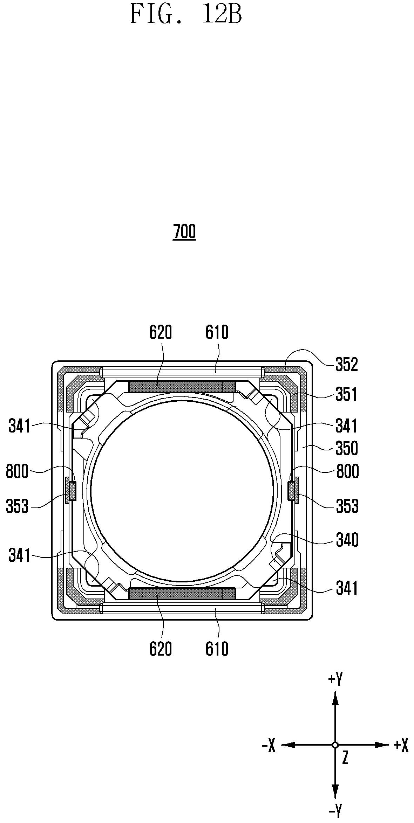

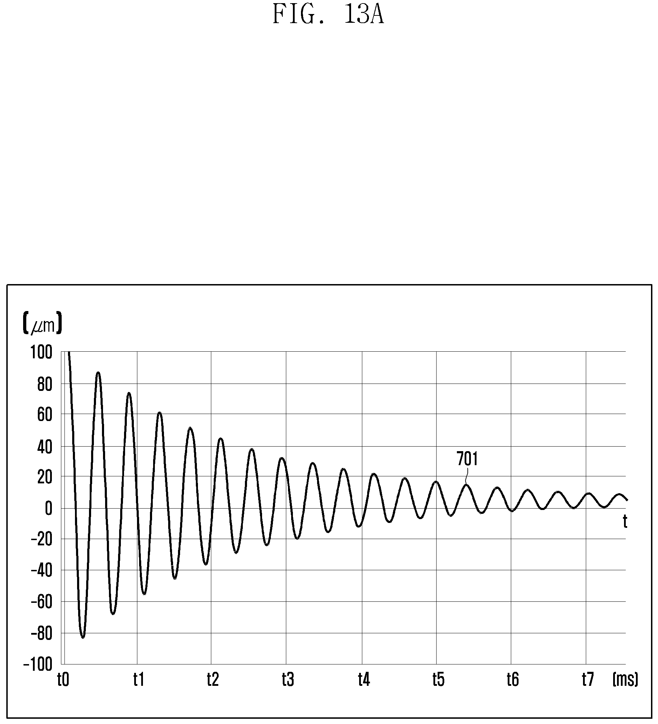

In an embodiment, the one or more elastic members 400 may attenuate the vibration of the AF housing 340 caused by an external impact or the like applied to the camera module 300. In an embodiment, the one or more elastic members 400 may fill the gaps between the first sidewall 341 of the AF housing 340 and the third sidewalls 351 of the lower housing 350. Accordingly, when an external impact is applied to the camera module 300, vibration of the AF housing 340 in the X-axis or Y-axis direction of FIG. 6 relative to the lower housing 350 may be reduced. In an embodiment, as illustrated in FIG. 12B which will be described later, when the one or more elastic members 400 are disposed between the first sidewalls 341 and the third sidewalls 351, the rate at which the amplitude of the vibration generated in the AF housing 340 decreases may increase compared to when no elastic members 400 are disposed between the first sidewalls 341 and the third sidewalls 351, as illustrated in FIG. 13A. Accordingly, when vibrations occur in the AF housing 340, image shaking caused by the vibration of the lens assembly 310 accommodated in the AF housing 340 may be alleviated.

According to an embodiment, the one or more elastic members 400 may be made of various materials. These materials may have a stiffness ranging from approximately 1 MPa to approximately 10 GPa. In an embodiment, a material with a stiffness ranging from approximately 10 MPa to 1 GPa may be used. In an embodiment, the elastic members 400 may be made of a liquid material (e.g., epoxy, polyurethane, silicone) and may be applied between the first sidewalls 341 of the AF housing 340 and the third sidewalls 351 of the lower housing 350. In an embodiment, the one or more elastic members 400 may be applied in a liquid state through a dispenser (e.g., an injector) between the first sidewalls 341 and the third sidewalls 351 and then cured. In an embodiment, the one or more elastic members 400 may be converted into a fluid, solid, or semi-solid state through a curing process. In an embodiment, the one or more liquid-state elastic members 400 may be cured through UV curing or thermal curing. In addition, the one or more elastic members 400 may be formed as a solid and bonded to the first sidewalls 341 of the AF housing 340 and the third sidewalls 351 of the lower housing 350 via an adhesive member (e.g., double-sided tape or bond).

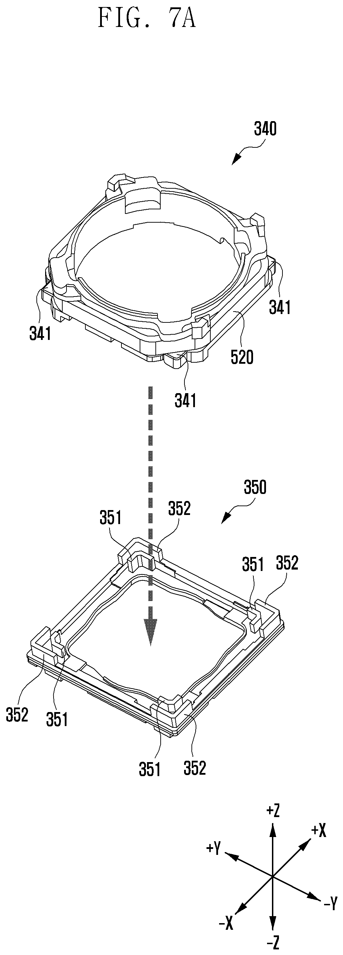

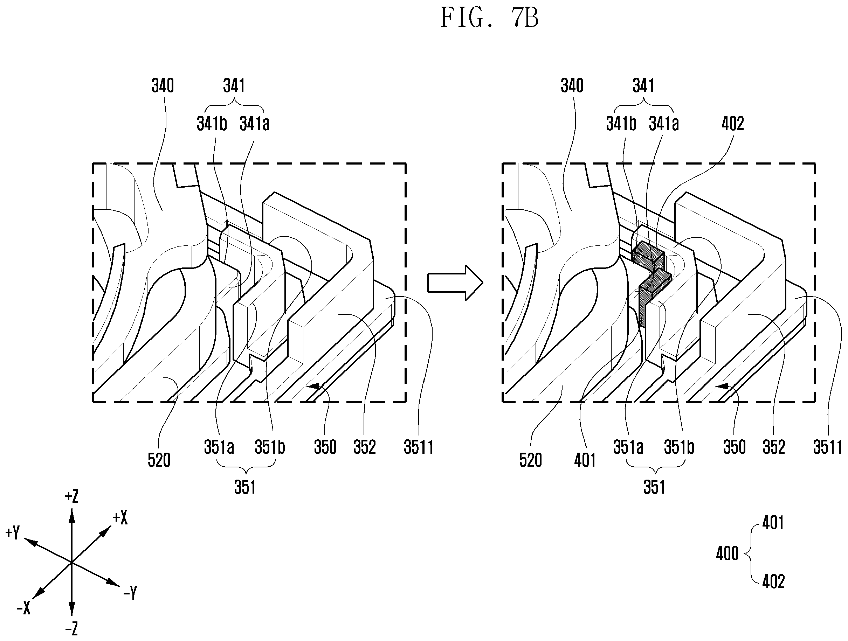

FIGS. 7A, 7B, and 7C are views illustrating the coupling relationship between an AF housing and a lower housing and the disposition positions of elastic members, according to an embodiment of the disclosure.

According to an embodiment, as illustrated in FIGS. 7A and 7B, the AF housing 340 may be disposed in the lower housing 350 such that the first sidewalls 341 thereof and the third sidewalls 351 of the lower housing 350 face each other. In an embodiment, the first sidewalls 341 of the AF housing 340 may each include a first region 341a and a second region 341b. In an embodiment, in each first sidewall 341, the first region 341a may be substantially perpendicular to the second region 341b. The third sidewalls 351 of the lower housing 350 may each include a first region 351a facing the first region 341a of the corresponding one of the first sidewalls 341 and a second region 351b facing the second region 341b of the corresponding one of the first sidewalls 341. In each third sidewall 351, the first region 351a may be substantially perpendicular to the second region 351b.

According to an embodiment, as illustrated in FIGS. 7A and 7B, the one or more elastic members 400 may be disposed in the spaces between the first sidewalls 341 of the AF housing 340 and the third sidewalls 351 of the lower housing 350. In an embodiment, each of the one or more elastic members 400 may include a first elastic member 401 disposed between the first region 341a of a first sidewall 341 and the first region 351a of a third sidewall 351 and a second elastic member 402 disposed between the second region 341b of a first sidewall 341 and the second region 351b of a third sidewall 351. In an embodiment, as illustrated in FIG. 7B, the first elastic member 401 and the second elastic member 402 may separate from each other and may be bonded to the first sidewall 341 of the AF housing 340 and the third sidewall 351 of the lower housing 350. In some embodiments, the first elastic member 401 and the second elastic member 402 may be integrated. In this case, the first elastic member 401 and the second elastic member 402 may be conceptually distinguished based on the positions where they are disposed between the first sidewall 341 and the third sidewall 351.

According to an embodiment, as illustrated in FIG. 7C, when the camera module 300 is viewed from above, the first elastic member 401 may cover an end portion of the second spring member SP2 (e.g., the end portion SP21 of the second spring member SP2 in FIG. 7C), which is disposed on the first support surface 3501 (e.g., the first support surface 3501 in FIG. 9A) of the lower housing 350. In an embodiment, the first elastic member 401 may fix the end portion SP21 of the second spring member SP2, which is disposed on the first support surface 3501 of the lower housing 350, to the lower housing 350. In an embodiment, the first elastic member 401 may be applied in a liquid state between the first region 341a of the first sidewall 341 and the first region 351a of the third sidewall 351, and may be cured through various curing methods (e.g., UV curing or thermal curing). In this case, the end portion SP21 of the second spring member SP2 disposed on the first support surface 3501 may penetrate the first elastic member 401 and may be at least partially disposed inside the first elastic member 401. Accordingly, the second spring member SP2 may be fixed to the lower housing 350 via the first elastic member 401.

The above description regarding FIG. 7C may be equally applied to the case where, when the camera module 300 is viewed from above, the second elastic member 402 covers a portion of the second spring member SP2 disposed on the first support surface 3501 of the lower housing 350. For example, the second elastic member 402 may fix the end portion of the second spring member SP2, which is disposed on the first support surface 3501 of the lower housing 350, to the lower housing 350.

In addition, in the embodiment of FIG. 7C, an exemplary description has been provided regarding the disposition relationship of a first elastic member 401, a second elastic member 402, and the second spring member SP2, which are disposed between one of the multiple first sidewalls 341 provided in the AF housing 340 and one of the multiple third sidewalls 351 provided in the lower housing 350. The description related to FIG. 7C may also be equally applied to the first elastic members 401, the second elastic members 402, and second spring members SP2 disposed between the remaining first sidewalls 341 provided in the AF housing 340 and the remaining third sidewalls 351 provided in the lower housing 350.

According to an embodiment of the disclosure, the first elastic members 401 and the second elastic members 402 may be disposed in the spaces (gaps) between the first sidewalls 341 of the AF housing 340 and the third sidewalls 351 of the lower housing 350. When an external impact is applied to the camera module 300, the vibration of the AF housing 340 in the X-axis or Y-axis direction of FIG. 7C relative to the lower housing 350 may be absorbed via the one or more elastic members 400. Accordingly, when an external force is applied to the camera module 300, the first elastic members 401 and the second elastic members 402 may attenuate the vibration of the AF housing 340 and mitigate the shaking of the lens assembly 310.

According to an embodiment of the disclosure, the elastic members (e.g., the first elastic members 401 and the second elastic members 402 in FIG. 7B) may be in contact with the AF housing 340 and the lower housing 350. The AF housing 340 and the lower housing 350 are separate components and may be connected via the elastic members 400.

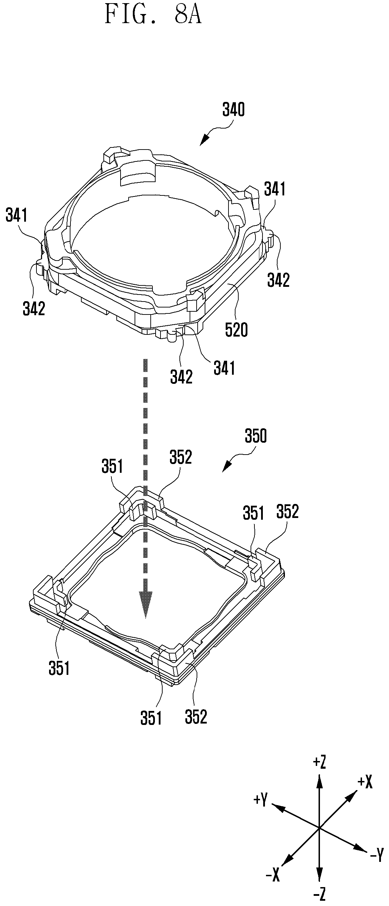

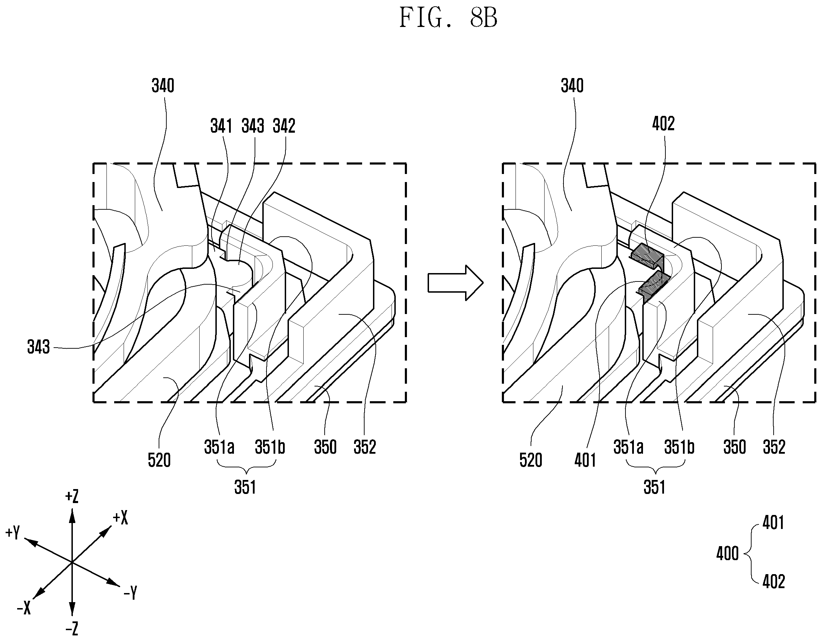

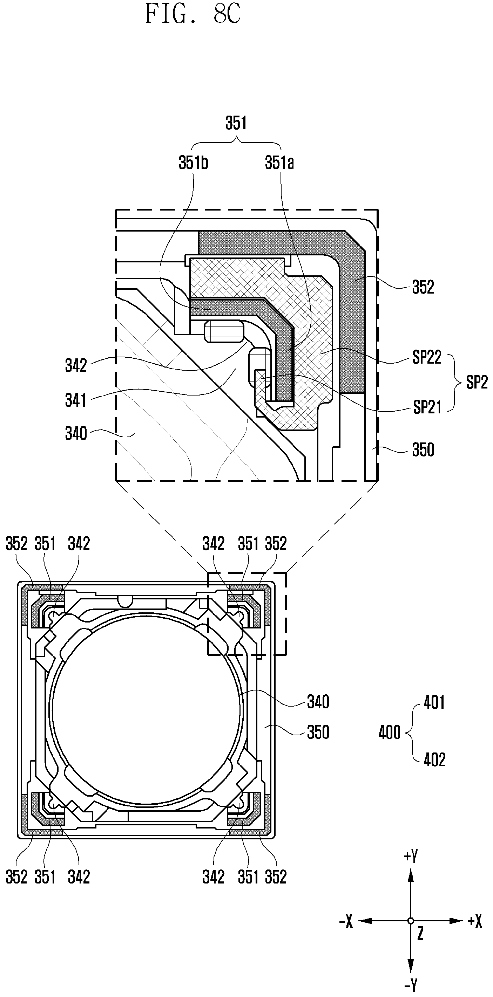

FIGS. 8A, 8B, and 8C are views illustrating the coupling relationship between an AF housing and a lower housing and the disposition positions of elastic members, according to an embodiment of the disclosure.

The following description of FIGS. 8A to 8C may relate to first sidewalls 341 of an AF housing 340, which have a shape different from that of the first sidewalls 341 of the AF housing 340 described in the embodiment of FIGS. 7A to 7C. In the following description, details identical to those described for FIGS. 7A to 7C will be omitted.

According to an embodiment, as illustrated in FIGS. 8A to 8C, the first sidewalls 341 of the AF housing 340 may include protrusions 342 respectively extending toward the third sidewalls 351 of the lower housing 350. In an embodiment, the protrusions 342 of the AF housing 340 may be in contact with the elastic members 400 (e.g., the first elastic members 401 and/or the second elastic members 402) disposed between the first sidewalls 341 and the third sidewalls 351.

According to an embodiment, as illustrated in FIGS. 8A to 8C, the first sidewalls 341 of the AF housing 340 may include recesses 343 that are provided adjacent to the protrusions 342, respectively. In an embodiment, the recesses 343 may be provided in a direction opposite to the third sidewalls 351. For example, the recesses 343 may be provided in the first regions 341a (e.g., the first regions 341a in FIG. 7C) of the first sidewalls 341 facing the first regions 351a of the third sidewalls 351 and/or in the second regions 341b (e.g., the second regions 341b in FIG. 7C) of the first sidewalls 341 facing the second regions 351b of the third sidewalls 351.

According to an embodiment, as illustrated in FIGS. 8A to 8C, the first elastic members 401 may be at least partially disposed in the recesses 343 provided in the first regions 341a of the first sidewalls 341 and may be bonded to the protrusions 342 and the first regions 351a of the third sidewalls 351. The second elastic members 402 may be at least partially disposed in the recesses 343 provided in the second regions 341b of the first sidewalls 341 and may be bonded to the protrusions 342 and the second region 351b of the third sidewalls 351. Accordingly, when an external impact is applied to the camera module 300, the vibration of the AF housing 340 in the X-axis or Y-axis direction of FIG. 8C relative to the lower housing 350 may be absorbed via the one or more elastic members 400. Accordingly, when an external force is applied to the camera module 300, the first and second elastic members 401 and 402 may attenuate the vibration of the AF housing 340 and mitigate the shaking of the lens assembly 310.

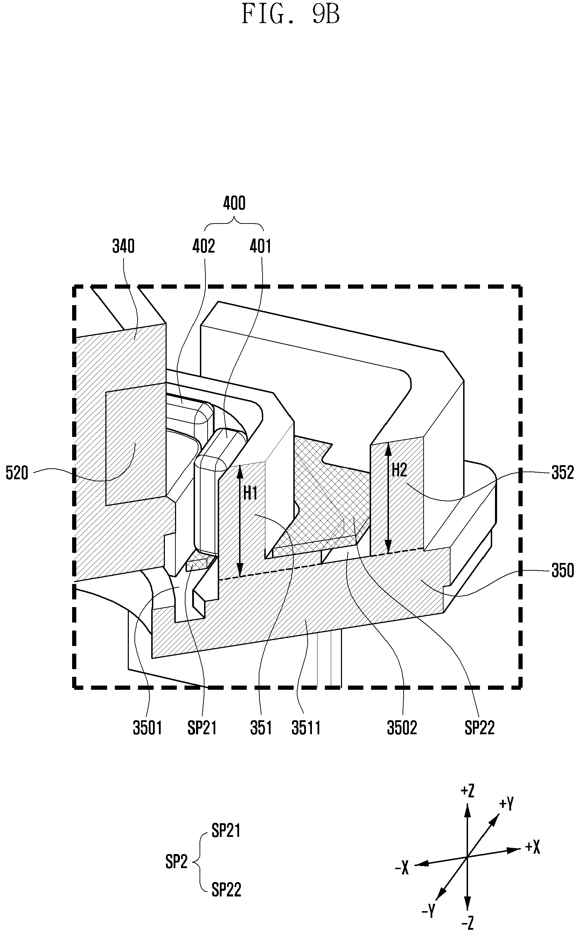

FIGS. 9A and 9B are views illustrating the positional relationship between a spring member and an elastic member disposed in the lower housing according to an embodiment of the disclosure.

According to an embodiment, as illustrated in FIGS. 9A and 9B, the bottom surface 3511 of the lower housing 350 may include a first support surface 3501 positioned between a third sidewall 351 of the lower housing 350 and a first sidewall 341 of the AF housing 340, and a second support surface 3502 positioned between a third sidewall 351 and a fourth sidewall 352 of the lower housing 350. In an embodiment, the first support surface 3501 may be provided lower than the second support surface 3502. For example, the first support surface 3501 may be positioned in the -Z direction of FIG. 9B relative to the second support surface 3502, thereby forming a step with the second support surface 3502. However, in some embodiments, the first support surface 3501 and the second support surface 3502 may be positioned substantially on the same plane. In addition, in some embodiments, the first support surface 3501 may be positioned higher than the second support surface 3502, thereby forming a step with the second support surface 3502.

According to an embodiment, as illustrated in FIGS. 9A and 9B, the lower housing 350 may include a third sidewall 351 and a fourth sidewall 352 positioned outside the third sidewall 351. In an embodiment, the third sidewall 351 and the fourth sidewall 352 may have different heights (e.g., lengths in the Z-axis direction in FIGS. 9A and 9B). For example, the height H1 of the third sidewall 351 relative to the second support surface 3502 may be lower than the height H2 of the fourth sidewall 352 relative to the second support surface 3502. In this case, the top surface of the third sidewall 351 may be positioned lower than the top surface of the fourth sidewall 352. Conversely, in some embodiments, the height H1 of the third sidewall 351 may be higher than the height H2 of the fourth sidewall 352. For example, the height H1 of the third sidewall 351 relative to the second support surface 3502 may be higher than the height H2 of the fourth sidewall 352 relative to the second support surface 3502. In an embodiment, the height H1 of the third sidewall 351 relative to the second support surface 3502 may be constant over a certain length. Similarly, the height H2 of the fourth sidewall 352 relative to the second support surface 3502 may be constant over a certain length. In an embodiment, the fourth sidewall 352 may be have a length L2 that encloses the third sidewall 351. For example, the length L1 of the third sidewall 351 in the extension direction (e.g., the length extending from the first region 351a to the second region 351b of the third sidewall 351) may be shorter than the length L2 of the fourth sidewall 352 in the extension direction.

According to an embodiment, as illustrated in FIGS. 9A and 9B, the second spring member SP2 may be at least partially disposed on each of the first support surface 3501 and the second support surface 3502 of the lower housing 350. In an embodiment, a portion of the second spring member SP2 may be connected to the AF housing 340, and an end portion SP21 (e.g., the end portion SP21 in FIG. 7C) may be disposed on the first support surface 3501 between the first sidewall 341 and the third sidewall 351 to be adjacent to the elastic member 400 (e.g., the first elastic member 401 and/or the second elastic member 402). For example, when the camera module 300 is viewed from above (e.g., in the -Z direction of FIG. 9B), the end portion SP21 (e.g., the end portion SP21 in FIG. 7C) of the second spring member SP2 may overlap the first elastic member 401 or the second elastic member 402. In an embodiment, the end portion SP21 (e.g., the end portion SP21 in FIG. 7C) of the second spring member SP2 may be fixed to the first support surface 3501 of the lower housing 350 or a portion of the lower housing 350 (e.g., the third partition wall 351) via the first elastic member 401 and/or the second elastic member 402. In an embodiment, referring to FIGS. 9A and 9B, a portion SP22 of the second spring member SP2 may be disposed on the second support surface 3501 of the lower housing 350.

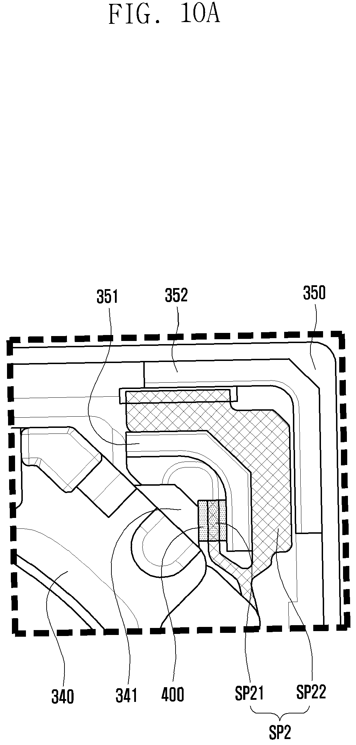

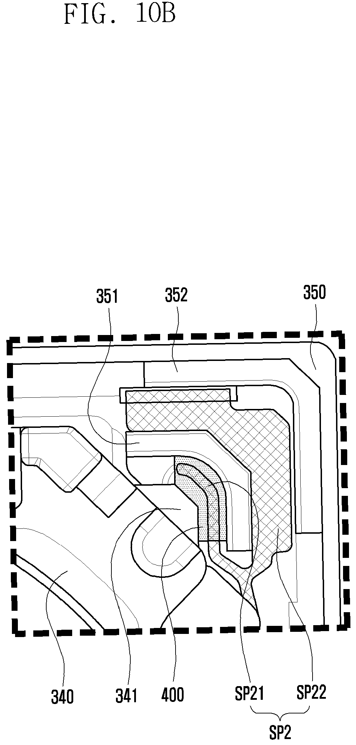

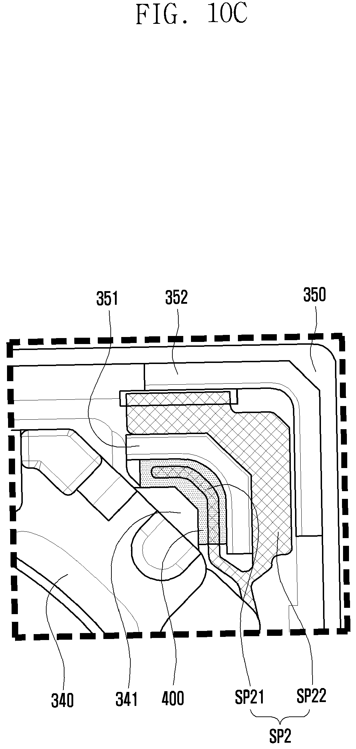

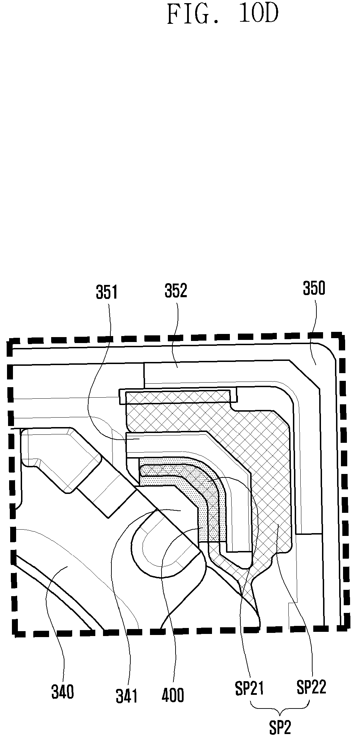

FIGS. 10A, 10B, 10C, and 10D are views illustrating the variability of a disposition region of an elastic member depending on the shape of a spring member in an embodiment of the disclosure.

According to an embodiment, as illustrated in FIGS. 10A to 10D, a second spring member SP2 may be at least partially disposed on each of the first support surface 3501 (e.g., the first support surface 3501 in FIG. 9A) and the second support surface 3502 (e.g., the second support surface 3502 in FIG. 9A) of the lower housing 350. In an embodiment, the end portion SP21 of the second spring member SP2 may be disposed on the first support surface 3501 positioned between the first sidewall 341 of the AF housing 340 and the third sidewall 351 of the lower housing 350. In an embodiment, when the camera module 300 is viewed from above (e.g., in the -Z direction of FIG. 9B described above), the end portion SP21 of the second spring member SP2 may overlap the one or more elastic members 400. In an embodiment, the one or more elastic members 400 may fix the end portion SP21 of the second spring member SP2 to the first support surface 3501 of the lower housing 350 or a portion of the lower housing 350 (e.g., the third partition wall 351). In an embodiment, referring to FIGS. 10A to 10D, the one or more elastic members 400 may be applied following the shape of the end portion SP21 of the second spring member SP2. For example, as sequentially observed from FIG. 10A to FIG. 10D, as the shape of the end portion SP21 of the second spring member SP2 expands, the region in which the one or more elastic members 400 is applied between the first sidewall 341 of the AF housing 340 and the third sidewall 351 of the lower housing 350 may increase. Accordingly, the application region of the one or more elastic members 400 may change based on the degree of expansion of the end portion SP21 of the second spring member SP2.

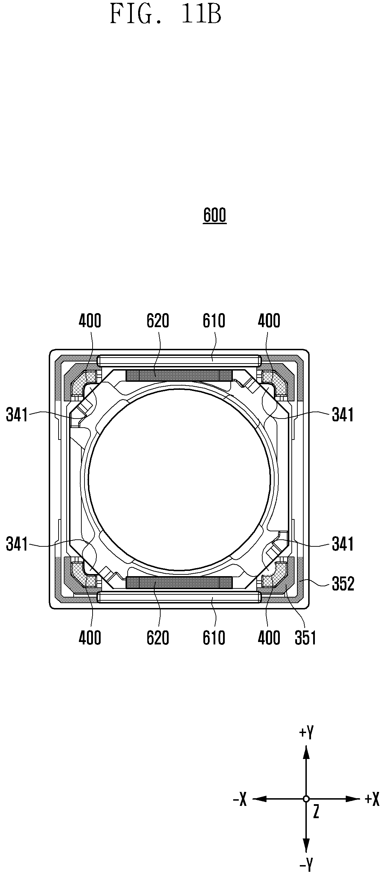

FIGS. 11A and 11B are views illustrating a camera module including AF magnets and AF coils having a disposition relationship that differs from that of the AF magnets and the AF coils in FIG. 4.

The following description of FIGS. 11A and 11B may relate to a camera module 600 (e.g., the camera module 180 in FIG. 1) including AF magnets 510 and AF coils 520 having a disposition relationship that differs from that of the AF magnets 610 and the AF coils 620 of the camera module 300 described with reference to FIGS. 3A to 9B. Hereafter, descriptions of configurations identical or similar to those described above will be omitted, and the details described with reference to FIGS. 3A to 9B may be applied instead.

According to an embodiment, as illustrated in FIGS. 11A and 11B, the camera module 600 (e.g., the camera module 180 in FIG. 1 and/or the camera module 300 in FIG. 3A) may include AF magnets 610 (e.g., the AF magnets 510 in FIG. 4) disposed in the AF housing 340 to face each other and AF coils 620 (e.g., the AF coils 520 in FIG. 4) disposed to face the AF magnets 610. In an embodiment, the AF coils 620 may be disposed in the AF housing 340 and may face each other. In an embodiment, the AF coils 620 may be disposed inside the shield can 320, which accommodates the AF housing 340 and covers a portion of the lower housing 350.

According to an embodiment, as illustrated in FIGS. 11A and 11B, the camera module 600 may include the one or more elastic members 400 disposed in the spaces between the first sidewalls 341 of the AF housing 340 and the third sidewalls 351 of the lower housing 350. In an embodiment, as illustrated in FIGS. 7A to 8C, the one or more elastic members 400 may each include a first elastic member 401 bonded between the first region 341a of a first sidewall 341 and the first region 351a of a third sidewall 351 and a second elastic member 402 bonded between the second region 341b of a first sidewall 341 and the second region 351b of a third sidewall 351. In an embodiment, the first elastic member 401 and the second elastic member 402 may be physically separated. In some embodiments, the first elastic member 401 and the second elastic member 402 may be integrated. Accordingly, when an external impact is applied to the camera module 300, the shaking of the AF housing 340 may be buffered via the one or more elastic members 400 (e.g., the first elastic members 401 and/or the second elastic members 402), which are disposed between the first sidewalls 341 of the AF housing 340 and the third sidewalls 351 of the lower housing 350.

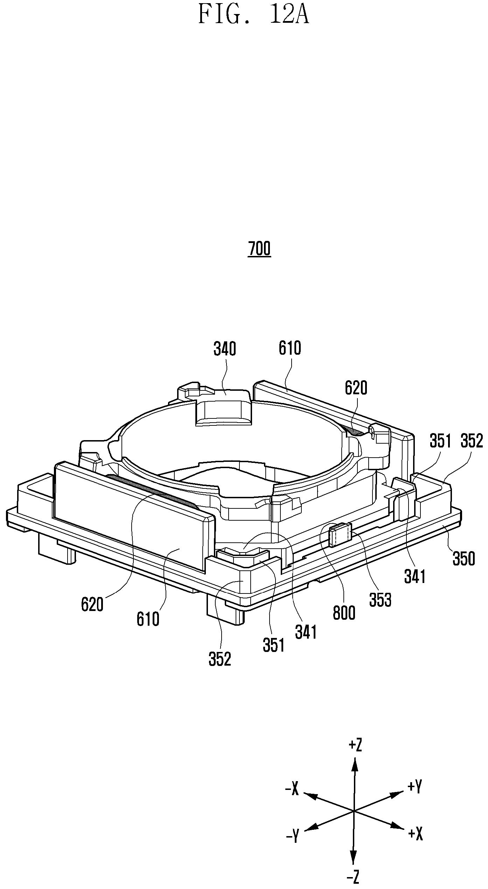

FIGS. 12A and 12B are views illustrating a camera module including elastic members disposed within the camera module at positions that differ from those illustrated in FIG. 6, according to an embodiment of the disclosure.

The camera module 700 illustrated in FIGS. 12A and 12B (e.g., the camera module 180 in FIG. 1 and/or the camera module 300 in FIG. 3A) may include the AF magnets 610 and the AF coils 620 of the camera module 600 illustrated in FIGS. 11A and 11B.

The elastic members 800 illustrated in FIGS. 12A and 12B (e.g., the elastic members 400 in FIG. 6) may be disposed in regions between the AF housing 340 and the lower housing 350 that differ from the regions where the one or more elastic members 400 described with reference to FIGS. 3A to 11B are disposed. Hereafter, descriptions of configurations identical or similar to those described above will be omitted, and the details described with reference to FIGS. 3A to 11B may be applied instead.

According to an embodiment, as illustrated in FIGS. 12A and 12B, the elastic members 800 may be disposed in the spaces between the portions of the AF housing 340 where the AF coils 520 are not disposed and the lower housing 350. In an embodiment, the portions where the AF coils 620 are not disposed may be portions substantially perpendicular to the portions where the AF coils 620 are disposed. In an embodiment, the lower housing 350 may include fifth sidewalls 353 facing the portions of the AF housing 340 where the AF coils 620 are not disposed. In an embodiment, the fifth sidewalls 353 may extend in a direction substantially perpendicular to the bottom surface 3511 of the lower housing 350 (e.g., in the +Z direction in FIG. 12A). In an embodiment, multiple fifth sidewalls 353 may be disposed to face each other.

According to an embodiment, as illustrated in FIGS. 12A and 12B, the elastic members 800 may be bonded to the AF housing 340 and the fifth sidewalls 353 in the spaces between the portions of the AF housing 340 where the AF coils 520 are not disposed and the fifth sidewalls 353. In an embodiment, the elastic members 800 may attenuate the vibration of the AF housing 340 caused by an external impact or the like applied to the camera module 300. For example, when an external impact is applied to the camera module 300, the vibration of the AF housing 340 relative to the lower housing 350 may be buffered via the elastic members 800 disposed between the AF housing 340 and the fifth sidewall 353. Accordingly, when an external force is applied to the camera module 700, the elastic members 800 may attenuate the vibration of the AF housing 340 and mitigate the shaking of the lens assembly 310.

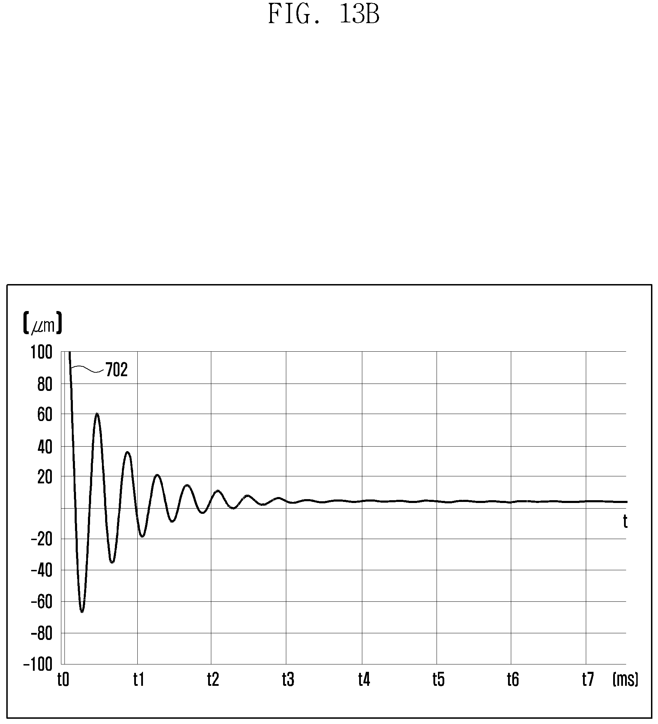

FIG. 13A is a view illustrating a graph that represents the vibration applied to the AF housing over time when an external impact is applied to a camera module that does not include elastic members in a comparative example. FIG. 13B is a view illustrating a graph that represents the vibration applied to the AF housing over time when an external impact is applied to a camera module including elastic members of the disclosure.

FIG. 13A is a graph 701 that represents the amplitude (µm (micrometer)) of the vibration applied to the AF housing 340 over time (ms (millisecond)) in a state where no elastic members 400 are disposed between the first sidewalls 341 and the third sidewalls 351, according to an exemplary simulation. FIG. 13B is a graph 702 that represents the amplitude (µm) of the vibration applied to the AF housing 340 over time (ms) when the one or more elastic members 400 are disposed between the AF housing 340 and the lower housing 350, as illustrated in FIGS. 7A to 8C, according to an exemplary simulation.

In an embodiment, when the one or more elastic members 400 are disposed between the first sidewalls 341 and the third sidewalls 351, the rate at which the vibration of the AF housing 340 attenuates may be increased compared to when no elastic members 400 are disposed between the first sidewalls 341 and the third sidewalls 351. For example, referring to the graphs 701 and 702 in FIGS. 13A and 13B at each time point (t1 to t7), it may be observed that the amplitude of the vibration of the AF housing 340 over time in the graph 702 of FIG. 13B is lower than that in the graph 701 of FIG. 13A. In addition, it may be observed that the time required for the amplitude of the vibration to decrease is shorter in the graph 702 of FIG. 13B than in the graph 701 of FIG. 13A. Accordingly, the vibration of the AF housing 340 may be attenuated by disposing the one or more elastic members 400 between the first sidewalls 341 of the AF housing 340 and the third sidewalls 351 of the lower housing 350. In addition, when vibrations occur in the AF housing 340, image shaking caused by the vibration of the lens assembly 310 accommodated in the AF housing 340 may be alleviated.

According to an embodiment, the camera module 180 or 300 may include the AF housing 340, which is used for the AF function that automatically adjusts the focus of the lens 312 on a subject. The AF housing 340 may accommodate a lens assembly 310 that includes at least one lens 312. As the AF housing 340 moves along the optical axis of the lens 312 (e.g., the Z-axis direction of FIG. 4 described above), the focus of the lens 312 may be adjusted. The AF housing 340 may be disposed in the lower housing 350, which is positioned under the AF housing 340, and may move along the optical axis of the lens 312 relative to the lower housing 350. For example, the AF housing 340 may move along the optical axis of the lens 312 relative to the lower housing 350 via electromagnetic force generated by an AF actuator (e.g., the AF magnets 510 or 610 and the AF coils 520 or 620). A certain gap may be provided between the AF housing 340 and the lower housing 350 to facilitate the movement of the AF housing 340 in the optical axis direction and to account for assembly tolerances of the AF housing 340 relative to the lower housing 350.

Meanwhile, when an external impact is applied to the electronic device 101 in which the camera module 180 or 300 is disposed, the AF housing 340 may shake relative to the lower housing 350. In this case, the lens assembly 310 disposed in the AF housing 340 may shake along with the AF housing 340. Accordingly, image shaking may occur in the camera module 180 or 300 while taking a picture of a subject.

Hence, the inclusion of the one or more elastic members 400 may contribute to an improvement of image quality, because shaking of the AF housing 340 can be mitigated due to the damping of the one or more elastic members 400.

The technical problems to be addressed by the disclosure are not limited to those described above, and other technical problems may be clearly understood by a person ordinarily skilled in the related art to which the disclosure pertains.

According to an embodiment of the disclosure, a camera module 180 or 300 may include a lens assembly 310 including one or more lenses 312 substantially aligned along an optical axis, an image sensor 381 configured to detect light acquired through the lens assembly, an AF housing 340 including a first sidewall 341, wherein the AF housing is configured to accommodate at least a portion of the lens assembly and to move substantially along the optical axis, an upper housing 330 including a second sidewall 331, wherein the second sidewall surrounds at least a portion of the AF housing, faces the first sidewall, and is spaced apart from the first sidewall, a lower housing 350 coupled to the upper housing and including a third sidewall 351, wherein the third sidewall surrounds at least a portion of the image sensor, and is positioned between the first sidewall and the second sidewall, and an elastic member 400 disposed between the third sidewall of the lower housing and the first sidewall of the AF housing.

In an embodiment, the camera module may further include a spring member SP2 disposed in the lower housing. One end portion of the spring member may be connected to the AF housing and the other end portion of the spring member extends between the first sidewall and the third sidewall to be positioned adjacent to the elastic member.

In an embodiment, the other end portion of the spring member may be disposed to at least partially penetrate the elastic member.

In an embodiment, the third sidewall may be disposed to substantially face an edge of the AF housing.

In an embodiment, the third sidewall may include a first region 351a and a second region 351b substantially perpendicular to each other, and the elastic member may include a first elastic member 401 and a second elastic member 402 disposed in the first region and the second region, respectively.

In an embodiment, the first elastic member and the second elastic member may be spaced apart from each other.

In an embodiment, the first sidewall may include a protrusion 342 protruding toward the third sidewall to be in contact with the elastic member.

In an embodiment, the protrusion may include a recess 343 formed in a direction opposite to the third sidewall at one end portion, and at least a portion of the recess may be in contact with the elastic member.

In an embodiment, a portion of the second sidewall may protrude toward the lower housing to cover at least a portion of the elastic member when viewed from above the camera module.

In an embodiment, the lower housing may include a fourth sidewall 352 disposed outside the second sidewall of the upper housing.

In an embodiment, one end portion of the second sidewall of the upper housing may be positioned between the third sidewall and the fourth sidewall of the lower housing.

In an embodiment, the third sidewall may have a height H1 lower than the height H2 of the fourth sidewall.

In an embodiment, the third sidewall may have a length L1 shorter than a length L2 of the fourth sidewall.

In an embodiment, the third sidewall and the fourth sidewall may protrude from a bottom surface 3511 of the lower housing, and the bottom surface includes a first support surface 3501 between the third sidewall and the first sidewall and a second support surface 3502 between the third sidewall and the fourth sidewall. The first support surface may be lower than the second support surface.

In an embodiment, the third sidewall may have a substantially equal height H1 throughout its entire length.

In an embodiment, no elastic member may be disposed between the second sidewall and the third sidewall.

In an electronic device 101 including a camera module 180 or 300 according to an embodiment of the disclosure, the camera module may include a lens assembly 310 including one or more lenses 312 substantially aligned along an optical axis, an image sensor 381 configured to detect light acquired through the lens assembly, an autofocus (AF) housing 340 including a first sidewall 341, wherein the autofocus housing is configured to accommodate at least a portion of the lens assembly and to move substantially along the optical axis, an upper housing 330 including a second sidewall 331, wherein the second sidewall surrounds at least a portion of the AF housing, faces the first sidewall, and is spaced apart from the first sidewall, a lower housing 350 coupled to the upper housing and including a third sidewall 351, wherein the third sidewall surrounds at least a portion of the image sensor, and is positioned between the first sidewall and the second sidewall, and an elastic member 400 disposed between the third sidewall of the lower housing and the first sidewall of the AF housing.

In an embodiment, the camera module may further include a spring member SP2 disposed in the lower housing. One end portion of the spring member may be connected to the AF housing and the other end portion of the spring member extends between the first sidewall and the third sidewall to be positioned adjacent to the elastic member.

In an embodiment, the third sidewall may be disposed to substantially face an edge of the AF housing and may include a first region 351a and a second region 351b which are perpendicular to each other, and the elastic member may include a first elastic member 401 and a second elastic member 402 disposed in the first region and the second region, respectively.

In an embodiment, a portion of the second sidewall may protrude toward the lower housing to cover at least a portion of the spring member when viewed from above the camera module.

According to various embodiments disclosed herein, an elastic member 400 may be disposed between one sidewall 341 of the AF housing 340 and one sidewall 351 of the lower housing 350. The elastic member 400 may attenuate vibrations (e.g., shaking) of the AF housing 340 with respect to the lower housing 350 when an external impact is applied to the camera module 180 or 300. Accordingly, when vibrations occur in the AF housing 340, image shaking caused by the vibration of the lens assembly 310 accommodated in the AF housing 340 may be alleviated.

In a comparative embodiment, in a state where the AF housing 340, the lower housing 350, and the upper housing 330 are assembled, the elastic member 400 may be applied between one sidewall 341 of the AF housing 340 and one sidewall 351 of the lower housing 350. In this case, the elastic member 400 may be applied to an unintended position (e.g., a region other than a region between the one sidewall 341 of the AF housing 340 and the one sidewall 351 of the lower housing 350), and the elastic member 400 may be contaminated by foreign substances. According to an embodiment of the present disclosure, after the elastic member 400 is applied between one sidewall 341 of the AF housing 340 and one sidewall 351 of the lower housing 350, the upper housing 330 may be assembled to the lower housing 350. Accordingly, the elastic member 400 may be precisely applied between the one sidewall 341 of the AF housing 340 and the one sidewall 351 of the lower housing 350, and the possibility of contamination of the elastic member 400 due to foreign substances may be reduced.

Advantageous effects obtainable from the disclosure may not be limited to the above-mentioned effects, and other effects which are not mentioned may be clearly understood from the following descriptions by those skilled in the art to which the disclosure pertains.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in another element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. A camera module (180, 300) comprising:
a lens assembly (310) including one or more lenses (312) substantially aligned along an optical axis;
an image sensor (381) configured to detect light acquired through the lens assembly;
an autofocus (AF) housing (340) including a first sidewall (341), wherein the autofocus housing is configured to accommodate at least a portion of the lens assembly and to move substantially along the optical axis;
an upper housing (330) including a second sidewall (331), wherein the second sidewall surrounds at least a portion of the AF housing, faces the first sidewall, and is spaced apart from the first sidewall;
a lower housing (350) coupled to the upper housing and including a third sidewall (351), wherein the third sidewall surrounds at least a portion of the image sensor, and is positioned between the first sidewall and the second sidewall; and
an elastic member (400) disposed between the third sidewall of the lower housing and the first sidewall of the AF housing.

2. The camera module of claim 1, further comprising:
a spring member (SP2) disposed in the lower housing,
wherein one end portion of the spring member is connected to the AF housing and another end portion of the spring member extends between the first sidewall and the third sidewall to be positioned adjacent to the elastic member.

3. The camera module of claim 2, wherein the another end portion of the spring member is disposed to at least partially penetrate the elastic member.

4. The camera module of any of claims 1-3, wherein the third sidewall is disposed to substantially face an edge of the AF housing.

5. The camera module of claim 4, wherein the third sidewall includes a first region (351a) and a second region (351b) substantially perpendicular to each other, and
wherein the elastic member includes a first elastic member (401) and a second elastic member (402) disposed in the first region and the second region, respectively.

6. The camera module of claim 5, wherein the first elastic member and the second elastic member are spaced apart from each other.

7. The camera module of any of claims 1-6, wherein the first sidewall includes a protrusion (342) protruding toward the third sidewall to be in contact with the elastic member.

8. The camera module of claim 7, wherein the protrusion includes a recess (343) formed in a direction opposite to the third sidewall at one end portion, and
wherein at least a portion of the recess is in contact with the elastic member.

9. The camera module of any of claims 1-8, wherein a portion of the second sidewall protrudes toward the lower housing to cover at least a portion of the elastic member when viewed from above the camera module.

10. The camera module of any of claims 1-9, wherein the lower housing includes a fourth sidewall (352) disposed outside the second sidewall of the upper housing.

11. The camera module of any of claims 1-10, wherein one end portion of the second sidewall of the upper housing is positioned between the third sidewall and the fourth sidewall of the lower housing.

12. The camera module of any of claims 1-11, wherein the third sidewall has a height (H1) lower than a height (H2) of the fourth sidewall.

13. The camera module of any of claims 1-12, wherein the third sidewall has a length (L1) shorter than a length (L2) of the fourth sidewall.

14. The camera module of any of claims 1-13, wherein the third sidewall and the fourth sidewall protrude from a bottom surface (3511) of the lower housing, and
wherein the bottom surface includes a first support surface (3501) between the third sidewall and the first sidewall and a second support surface (3502) between the third sidewall and the fourth sidewall, the first support surface being lower than the second support surface.

15. An electronic device (101) comprising a camera module (180, 300),
wherein the camera module comprises:
a lens assembly (310) including one or more lenses (312) substantially aligned along an optical axis;
an image sensor (381) configured to detect light acquired through the lens assembly;
an autofocus (AF) housing (340) including a first sidewall (341), wherein the autofocus housing is configured to accommodate at least a portion of the lens assembly and to move substantially along the optical axis;
an upper housing (330) including a second sidewall (331), wherein the second sidewall surrounds at least a portion of the AF housing, faces the first sidewall, and is spaced apart from the first sidewall;
a lower housing (350) coupled to the upper housing and including a third sidewall (351), wherein the third sidewall surrounds at least a portion of the image sensor, and is positioned between the first sidewall and the second sidewall; and
an elastic member (400) disposed between the third sidewall of the lower housing and the first sidewall of the AF housing.
